# EUROPEAN PATENT SPECIFICATION

(11) **EP 4 641 363 B1**
(45) Date of publication and mention of the grant of the patent: **21.01.2026**
(21) Application number: 24208405.1
(22) Date of filing: 23.10.2024
(51) Int. Cl.: G06F 3/06, G06F 12/02

(54) **METHOD AND SYSTEM FOR RECLAIMING STORAGE SPACE IN DISAGGREGATED STORAGE SYSTEM**
VERFAHREN UND SYSTEM ZUR RÜCKGEWINNUNG VON SPEICHERPLATZ IN EINEM VERTEILTEN SPEICHERSYSTEM
PROCÉDÉ ET SYSTÈME DE RÉCUPÉRATION D'ESPACE DE STOCKAGE DANS UN SYSTÈME DE STOCKAGE DÉSAGRÉGÉ

(30) Priority: 23.04.2024 IN 202441032229
(43) Date of publication of application: 29.10.2025
(73) Proprietor: Samsung Electronics Co., Ltd, Suwon-si, Gyeonggi-do 16677 (KR)
(72) Inventor: JAIN, Preetham Parshwanath, Bengaluru (IN); GUDDEKOPPA, Vishak, Bengaluru (IN)
(74) Representative: Marks & Clerk LLP

(56) References cited:
- WO-A2-2020/226979
- US-A1- 2015 193 299
- US-A1- 2021 072 893
- US-B1- 10 678 431

## Description

### TECHNICAL FIELD

The present subject matter is related in general to disaggregated storage systems. The present invention generally relates to a method and system for dynamically reclaiming storage space in a disaggregated storage system.

### BACKGROUND

Currently, flash-based storage systems are being widely adopted in datacenters. The adoption of flash-based storage has been accelerated by factors such as demand for larger storage spaces for emerging Artificial Intelligence (AI)/Machine Learning (ML) type workloads, availability of cheaper flash-based storage in the form of Quadruple Level Cells (QLC), Penta Level Cells (PLC) etc., and movement from on-premises storage to cloud-based storage, etc.

The accelerated adoption of flash in disaggregated storage systems has resulted in emergence of multi-layered storage architectures. The different layers of the storage architectures offer different endurance levels. Densities of storage nodes are also reaching peta-byte scale. In disaggregated storage architectures, storage nodes can be added at will. These factors may require endurance management at cluster level, which may require cluster level out of place write. Out of place write generates redundant data in storage space. As such, compaction is a process that allows for better utilization of existing storage spaces by removal of redundant data and cleanup of defunct objects. In existing systems, compaction begins with identification of source storage segments and destination storage segments. Source storage segments are identified based on the amount of valid data to move. If the amount of valid data to be moved is lesser, the probability of it being chosen for compaction is higher. The selection of destination segments is based on existing cluster level allocation policies which manage endurance and free space. Further, movement of data during compaction consumes cluster resources such as CPUs, network, etc. Thus, the amount of data to be moved is a direct contributing factor to the amount of cluster resources being utilized. Moreover, the impact on Quality of Service (QoS) cannot be predicted, as it is a dynamic/real-time process and compaction may also affect the QoS in unknown ways. Therefore, such background operations of compaction/space reclamation preferably do not affect QoS functionality of the storage clusters.

US2021072893 A1 (Singh et al; 11.3.21) relates to Single-Step Configuration Of Storage And Network Devices In A Virtualized Cluster Of Storage Resources, and discloses storage strategies for use of collections of storage resources, such as solid state drives, including in connection with a converged networking and storage node that may be used for virtualization of a collection of physically attached and/or network-connected storage resources.

US10678431 B1 (Smaldone et al; 9.6.20) relates to intelligent data movements between non-deduplicated and deduplicated tiers in a primary storage array, and discloses a primary storage array having multiple storage tiers. One embodiment provides for a data storage system including a quality of service (QoS) manager to manage data migration between a first storage tier and a second storage tier, the QoS manager to maintain deduplication statistics for deduplicated data.

WO2020/226979 A2 (Guim Bernat at al; 12.11.20) relates to multi-entity resource, security, and service management in edge computing deployments, and discloses features to enable the management of resources, security, and service management, in edge computing deployments, such as by a plurality of edge nodes of an edge computing environment configured for executing workloads from among multiple tenants.

US2015/193299 A1 (Jea Hyun et al; 9.7.15) relates to selective copyback for on die buffered non-volatile memory, and discloses methods for on die buffered non-volatile memory management.

The information disclosed in this background of the disclosure section is only for enhancement of understanding of the general background of the invention and should not be taken as an acknowledgement or any form of suggestion that this information forms the prior art already known to a person skilled in the art.

### SUMMARY OF THE INVENTION

According to a first aspect of the present invention, there is provided a method for dynamically reclaiming storage space in a disaggregated storage system, as defined by claim 1. According to a second aspect of the invention, there is provided a system for dynamically reclaiming storage space in a disaggregated storage system, as defined by claim 11. Preferred embodiments are defined by the dependent claims.

### BRIEF DESCRIPTION OF THE DRAWINGS

The accompanying drawings, which are incorporated in and constitute a part of this disclosure, illustrate example embodiments and, together with the description, serve to explain the disclosed principles. In the figures, the left-most digit(s) of a reference number identifies the figure in which the reference number first appears. The same numbers are used throughout the figures to reference features and components. Some embodiments of systems and/or methods in accordance with embodiments of the present subject matter are now described, by way of example only, and regarding the accompanying figures, in which:
Fig. 1 illustrates an environment for dynamically reclaiming storage space in a disaggregated storage system, in accordance with some embodiments of the present disclosure;
Fig. 2 illustrates a system for dynamically reclaiming storage space in a disaggregated storage system, in accordance with some embodiments of the present disclosure;
Fig. 3 depicts a flow diagram of an example method for dynamically reclaiming storage space in a disaggregated storage system, in accordance with some embodiments of the present disclosure;
Fig. 4 depicts a flowchart of an example method for dynamically reclaiming storage space in a disaggregated storage system, in accordance with some embodiments of the present disclosure;
Fig. 5 illustrates a block diagram depicting an example scenario for reclamation of storage space in a disaggregated storage system, in accordance with some embodiments of the present disclosure; and
Fig. 6 illustrates a block diagram of an example computing system, for executing embodiments consistent with the present disclosure, in accordance with some embodiments of the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiments thereof have been shown by way of example in the drawings and will be described in detail below. It should be understood, however, that it is not intended to limit the disclosure to the particular forms disclosed, but on the contrary, the disclosure is to cover all embodiments falling within the scope of the claims.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a device or system or apparatus proceeded by "comprises... a" does not, without more constraints, preclude the existence of other elements or additional elements in the device or system or apparatus.

The terms "includes", "including", or any other variations thereof, are intended to cover a non-exclusive inclusion, such that a setup, device, or method that includes a list of components or steps does not include only those components or steps but may include other components or steps not expressly listed or inherent to such setup or device or method. In other words, one or more elements in a system or apparatus proceeded by "includes... a" does not, without more constraints, preclude the existence of other elements or additional elements in the system or method.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

As used herein, the terms "communication" and "communicate" may refer to the reception, receipt, transmission, transfer, provision, and/or the like of information (e.g., data, signals, messages, instructions, commands, and/or the like). For one unit (e.g., a device, a system, a component of a device or system, combinations thereof, and/or the like) to be in communication with another unit means that the one unit is able to directly or indirectly receive information from and/or transmit information to the other unit. This may refer to a direct or indirect connection (e.g., a direct communication connection, an indirect communication connection, and/or the like) that is wired and/or wireless in nature. Additionally, two units may be in communication with each other even though the information transmitted may be modified, processed, relayed, and/or routed between the first and second unit. For example, a first unit may be in communication with a second unit even though the first unit passively receives information and does not actively transmit information to the second unit. As another example, a first unit may be in communication with a second unit if at least one intermediary unit (e.g., a third unit located between the first unit and the second unit) processes information received from the first unit and communicates the processed information to the second unit. In some non-limiting embodiments, a message may refer to a network packet (e.g., a data packet and/or the like) that includes data. It will be appreciated that numerous other arrangements are possible.

As used herein, the term "processor" may refer to any suitable data computation device or devices. A processor may comprise one or more microprocessors working together to accomplish a desired function. The processor may include CPU comprises at least one high-speed data processor adequate to execute program components for executing user and/or system-generated requests. The CPU may be a microprocessor such as AMD's Athlon^{™}, Duron and/or Opteron^{™}; IBM and/or Motorola's PowerPC^{®}; IBM's and Sony's Cell processor; Intel's Celeron^{®}, Itanium^{®}, Pentium^{®}, Xeon^{®}, and/or XScale^{®}; and/or the like processor(s).

As used herein, the term "memory" may be any suitable device or devices that can store electronic data. A suitable memory may comprise a non-transitory computer readable medium that stores instructions that can be executed by a processor to implement a desired method. Examples of memories may comprise one or more memory chips, disk drives, etc. Such memories may operate using any suitable electrical, optical, and/or magnetic mode of operation.

As used herein, the term "disaggregated storage" or "disaggregated storage system" may refer to a form of scalable storage that advantageously may have performance benefits of direct-attached storage with the flexibility of a storage area network (SAN). Disaggregated storage systems feature multiple storage sub-systems or devices such as storage clusters, which may be configured to function as a logical storage pool that can be reconfigured as needed without modifying the physical connections between them. Generally, a disaggregated storage system is a storage system that is physically separate from, but coupled for data communication with, a system comprising memory and processor functions.

In an embodiment, as used herein, the term "cluster" may refer to any suitable group of storage servers that may act like a single system that enable parallel processing. Each storage server of the group of storage servers may be depicted as a storage node. Each storage node may provide logical spaces for applications which may access them through semantics such as file, object, block, databases (DBs), etc. Each storage node may comprise physical storage in the form of flash tiers for storage of data. Each storage node may further comprise one or more storage segments.

As used herein, the term "workload" refers to the amount and type of work that a storage system may be expected to handle. It may represent a demand placed on the storage system by various operation(s) such as reading, writing, updating, and/or querying of data present in the storage system. A workload may for example comprise at least one amount of operation(s) of a respective said operation type wherein - in some embodiments - updating is treated as a type of write operation and/or querying as a type of read operation. The workload may vary based on the nature of the application using the storage system. For example, an e-commerce website may have a workload that includes frequent read operations to display product information, while a financial system may have a workload with complex queries and intensive writing operations.

As used herein, the term "read-intensive workload" may refer to a workload that is associated with frequent retrieval of data but infrequent updates. An example "read-intensive workload" may comprise more read operations than write operations, and/or a higher rate of read operations than write operations, wherein - in some embodiments - updating is treated as a type of write operation and/or querying as a type of read operation.

As used herein, the term "write-intensive workload" may refer to a workload that is associated with frequent updating of data but infrequent retrieval of data. An example "write-intensive workload" may comprise fewer read operations than write operations, and/or a lower rate of read operations than write operations, wherein - in some embodiments - updating is treated as a type of write operation and/or querying as a type of read operation.

In an embodiment, the term "valid data" may refer to data present in a segment of a storage node of a storage system that may still be relevant, required and/or essential in a current iteration. In embodiment, a current iteration comprises an iteration of a reclamation process, wherein iteration(s) of the process are preferably performed until a predefined number of segments are reclaimed. Each iteration may comprise incrementing a QPC.

In an embodiment, the term "invalid data" may refer to data present in a segment of a storage node of a storage system that may be irrelevant,and/or non-essential in a current iteration such as described above.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present invention as defined by the claims. The following description is, therefore, not to be taken in a limiting sense.

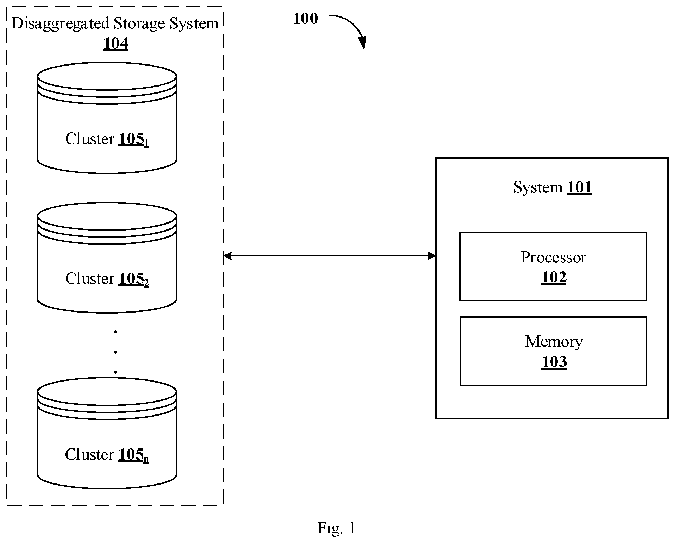

Fig. 1 illustrates an environment 100 for dynamically reclaiming storage space in a disaggregated storage system. The environment 100 may comprise a system 101 and a disaggregated storage system 104. The system 101 may comprise a processor 102 and a memory 103. The disaggregated storage system 104 may comprise one or more storage clusters 105₁, 105₂, ..., 105ₙ.

In an embodiment, the disaggregated storage system 104 may have one or more heterogeneous flash tiers in terms of endurance levels of each storage node.

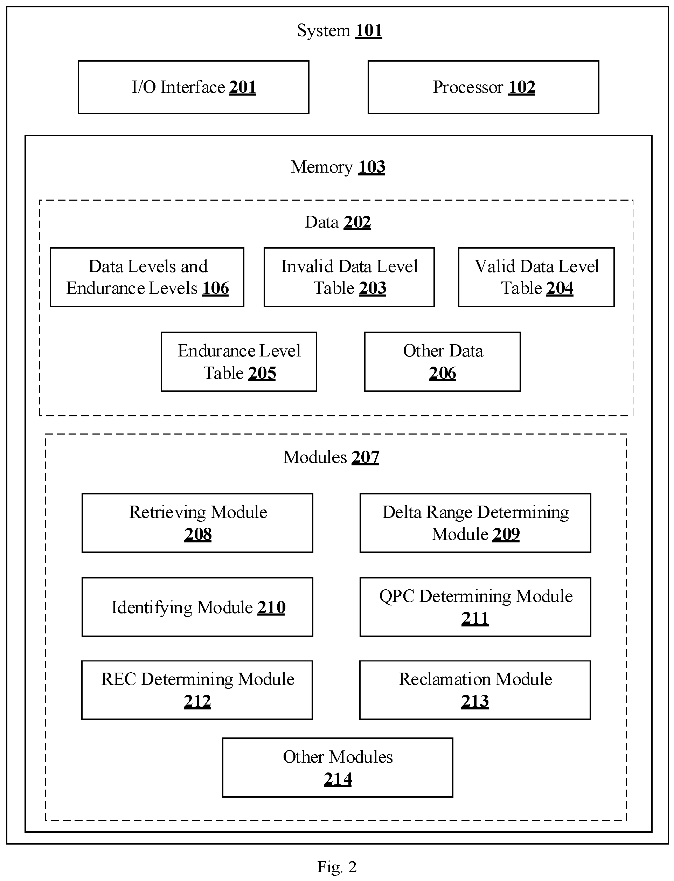

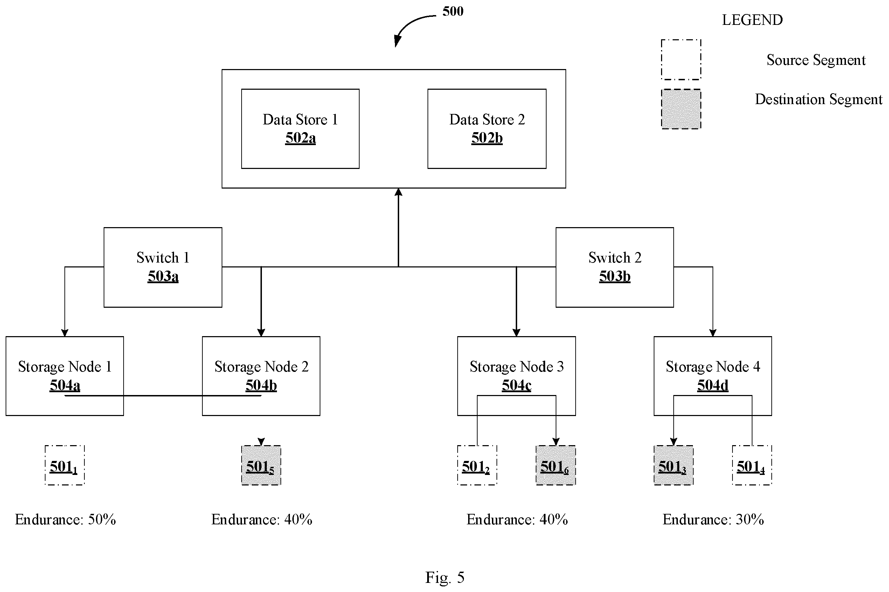

The system 101 is configured to dynamically reclaim storage space in the disaggregated storage system 104. The processor 102 is configured to retrieve a plurality of data levels and a plurality of endurance levels 106 (Fig. 2) for a plurality of storage nodes of the one or more storage clusters 105₁, 105₂, ..., 105ₙ, and may store it in the memory 103. The plurality of endurance levels relate to current endurance levels of the plurality of storage nodes of the one or more storage clusters 105₁, 105₂, ..., 105ₙ. For example, in Fig. 5, if a storage node 504c has a storage segment 501₂ with an endurance level of 20% and a storage segment 501₆ with an endurance level of 60%, then the endurance level of the storage node 504c may be an aggregated (e.g., average) value of endurance levels of the individual storage segments, i.e., the endurance level of the storage node 504c is 40%. It shall be noted that the endurance level is indicated as an aggregated value of endurance levels of individual storage segments of the storage node for example purposes, and the endurance level may be determined by other statistical techniques. Each data level of the plurality of data levels corresponds to an amount of data present in each storage segment of one or more storage segments associated with each of the plurality of storage nodes of the one or more storage clusters 105₁, 105₂, ..., 105ₙ. The processor 102 is configured to determine a first delta range (e.g., from the plurality of data levels) based on one or more first parameters associated with the plurality of data levels and a workload. In an embodiment, the workload may be the overall workload associated with the plurality of storage nodes of a cluster at a given point of time. In an embodiment, the plurality of data levels and the plurality of endurance levels may be dynamically updated.

In an embodiment, the one or more first parameters corresponds to (e.g., comprises at least one of) maximum invalid data level, minimum invalid data level, mean invalid data level, maximum valid data level, minimum valid data level, and/or mean valid data level associated with the plurality of storage nodes.

In an embodiment, the processor 102 determines the first delta range based on one or more first parameters (eg determined based on or as at least one difference between two first parameters indicating data levels) such as, without limitation to, the maximum invalid data level, minimum invalid data level, and/or mean invalid data level. The processor 102 determines the first delta range as a difference between maximum invalid data level and mean invalid data level when the plurality of data levels correspond to (e.g., indicate) amount of invalid data present in the one or more storage segments. In an embodiment, when the workload is write-intensive, the first delta range may be reduced by half.

In another embodiment, the processor 102 determines the first delta range based on one or more first parameters (eg determined based on or as at least one difference between two first parameters indicating data levels) such as, without limitation, the maximum valid data level, minimum valid data level, and/or mean valid data level. The processor 102 determines the first delta range as a difference between mean valid data level and minimum valid data level when the plurality of data levels correspond to (e.g., indicate) amount of valid data present in the one or more storage segments. In an embodiment, when the workload is write-intensive, the first delta range may be reduced by half.

In an embodiment, the processor 102 is configured to determine a second delta range (e.g., from the plurality of endurance levels) based on one or more second parameters associated with the plurality of endurance levels and the workload (eg determined based on or as at least one difference between two second parameters indicating endurance levels). In an embodiment, the one or more second parameters correspond to (e.g., comprise at least one of) maximum endurance level, minimum endurance level and/or mean endurance level associated with the plurality of storage nodes. The processor 102 may determine the second delta range as a difference between mean endurance level and minimum endurance level associated with the one or more storage nodes. In an embodiment, when the workload is write-intensive, the second delta range may be reduced by half.

The processor 102 is configured to identify one or more source nodes among the plurality of storage nodes based on the first delta range. The processor 102 is configured to identify one or more destination nodes among the plurality of storage nodes based on the second delta range.

In an embodiment, the processor 102 is configured to identify a set of storage node pairs among the one or more source nodes and the one or more destination nodes based on a Quality-of-service Penalty Coefficient (QPC). Generally, a storage node pair comprises a source node and a destination node. The QPC corresponds to a number of network hops required to establish a data path between a storage node pair (i.e., between the two storage nodes in a pair) of the set of storage node pairs. The QPC may indicate a minimum number of hops of such a data path. In an embodiment, the maximum possible QPC (may be defined as 'Z') may be predefined. In another embodiment, the maximum possible QPC may be user defined and may be received via I/O interface 201 (Fig. 2) from a user. The processor 102 may be configured to set the maximum possible QPC. For example, the processor 102 may be configured to identify a set of storage node pairs, for all possible (i.e., from zero to 'Z') QPC's. For example, if QPC is one, then storage node pairs where a data path between a source node with a storage segment that may be reclaimed and a destination node with a storage segment that has free storage space of a storage node pair may be established with one network hop may be determined. A storage node with a source storage segment may be defined as a source node. A storage node with a destination storage segment may be defined as a destination node. For example, in Fig. 5, if a source node 504a has a source storage segment 501₁ and a destination node 504b has a destination storage segment 501₅, a data path may be established between the two segments for transfer of valid data, resulting in a QPC of one.

In general, the reclamation process is an iterative method and is performed until the predefined number of segments are reclaimed.

The processor 102 is configured to perform reclamation of at least one storage segment among the set of storage node pairs.

Fig. 2 illustrates a detailed block diagram of the system 101. The system 101 may comprise the processor 102, an input/output (I/O) interface 201, the memory 103, and modules 207. The memory 103 may comprise data 202. The data 202 may comprise data such as, without limitation, data levels and endurance levels 106, an invalid data level table 203, a valid data level table 204, an endurance level table 205, and other data 206. The modules 207 may further comprise modules such as without limitation to, a retrieving module 208, a delta range determining module 209, an identifying module 210, a QPC determining module 211, a Reclaim Efficiency Coefficient (REC) determining module 212, a reclamation module 213, and other modules 214.

In an embodiment, the other data 206 may include various temporary data and files generated by the modules 207.

As used herein, the term 'module' may refer to an Application Specific Integrated Circuit (ASIC), an electronic circuit, a hardware processor (shared, dedicated, or group) and memory that execute one or more software or firmware programs, a combinational logic circuit, and/or other suitable components that provide the described functionality. In an implementation, each of the modules 207 may be configured as stand-alone hardware computing units. In an embodiment, the other modules 214 may be used to perform various miscellaneous functionalities of the system 101. It will be appreciated that the modules 207 may be represented as a single module or a combination of different modules.

In an embodiment, the retrieving module 208 may be configured to retrieve a plurality of data levels and a plurality of endurance levels 106 for a plurality of storage nodes of the one or more storage clusters 105₁, 105₂, ..., 105ₙ, of the disaggregated storage system 104 and may store it in the memory 103 as data levels and endurance levels 106 as part of the data 202. The retrieving module 208 may be configured to generate an invalid data level table 203 from the data levels 106. Invalid data levels may be determined based on the invalid data levels of the storage segments in a storage node from the data levels 106. Invalid data level may correspond to (e.g., indicate) amount of invalid data present in a storage segment of a storage node. For example, in Fig. 5, a storage node 504c has storage a segment 501₂. The storage segment 501₂ may have 20% of useful data/valid data and 80% of useless data/invalid data, then the invalid data level of the storage node 504c may be 80%. Invalid data levels may be considered for source nodes while performing reclamation. An example invalid data level table is depicted in Table 1 below.

**Table 1**

| **Invalid Data Levels** | **No. of segments in storage node 1** | **No. of segments in storage node 2** | **No. of segments in storage node 3** | **No. of segments in storage node 4** |
|---|---|---|---|---|
| 80-99% | 3 | | | |
| 60-79% | | 6 | | |
| 40-59% | | 10 | 2 | |
| 20-39% | | | | 5 |
| 0-19% | 2 | | | |

For example, in an embodiment, in the Table 1 above, storage node 1 may have three segments with invalid data levels of 80-99% and two storage segments with invalid data of 0-19%.

The retrieving module 208 may be configured to generate a valid data level table 204 from the data levels 106. Valid data levels may be determined based on the data levels of the storage segments in a storage node from the data levels 106. Valid data level may correspond to (e.g., indicate) the amount of valid data present in a storage segment of a storage node. For example, in Fig. 5, a storage node 504c has storage a segment 501₂. The storage segment 501₂ may have 20% of useful data/valid data and 80% of useless data/invalid data, then the valid data level of the storage node 504c may be 20%. Valid data levels may be considered for source nodes while performing reclamation. An example valid data level table is depicted in Table 2 below.

**Table 2**

| **Valid Data Levels** | **No. of segments in storage node 1** | **No. of segments in storage node 2** | **No. of segments in storage node 3** | **No. of segments in storage node 4** |
|---|---|---|---|---|
| 80-99% | 2 | | | |
| 60-79% | | | | 5 |
| 40-59% | | 10 | 2 | |
| 20-39% | | 6 | | |
| 0-19% | 3 | | | |

For example, in an embodiment, in the Table 2 above, storage node 1 may have three segments with valid data levels of 0-19% and two storage segments with 80-99% valid data.

The retrieving module 208 may be configured to generate an endurance level table 205 from endurance levels 106. Endurance levels may be determined based on the endurance levels of the storage segments in a storage node from the endurance levels 106. For example, in Fig. 5, if a storage node 504c has a storage segment 501₂ at an endurance level of 20% and a storage segment 501₆ at an endurance level of 60% endurance, then the endurance level of the storage node 504c may be the aggregated value of the individual storage segments, i.e., the endurance level of the storage node 504c is 40%. It shall be noted that the endurance level is indicated as an aggregated value of endurance levels of individual storage segments of the storage node. However, endurance level may be determined by other means. Endurance levels may be considered for destination nodes while performing reclamation. An example endurance level table is depicted in Table 3 below.

**Table 3**

| **Endurance Levels** | **Storage node** |
|---|---|
| 80-99% | |
| 60-79% | |
| 40-59% | Storage node 3, Storage node 1 |
| 20-39% | Storage node 2 |
| 0-19% | Storage node 3 |

For example, in an embodiment, in the Table 3 above, the endurance level of storage node 2 may be at 20-39%.

In an embodiment, the delta range determining module 209 is configured to determine the first delta range and the second delta range.

In an embodiment, the delta range determining module 209 determines the first delta range from the plurality of data levels based on one or more first parameters associated with the plurality of data levels associated with the plurality of storage nodes. In an embodiment, the one or more first parameters corresponds to maximum invalid data level, minimum invalid data level, mean invalid data level, maximum valid data level, minimum valid data level, and/or mean valid data level associated with the plurality of storage nodes.

**In** an embodiment, the delta range determining module 209 determines the first delta range based on one or more first parameters (eg determined based on or as at least one difference between two first parameters indicating data levels) such as, without limitation, the maximum invalid data level, minimum invalid data level, and/or mean invalid data level. The delta range determining module 209 determines the first delta range as a difference between maximum invalid data level and mean invalid data level when the plurality of data levels correspond to amount of invalid data present in the one or more storage segments. Generally, the first delta range is determined based on the first parameters and further based on a workload. **In** an embodiment, when the workload is write-intensive, the first delta range may be reduced by half.

**In** another embodiment, the delta range determining module 209 determines the first delta range based on one or more first parameters (eg determined based on or as at least one difference between two first parameters indicating data levels) such as, without limitation, the maximum valid data level, minimum valid data level, and/or mean valid data level. The delta range determining module 209 determines the first delta range as a difference between mean valid data level and minimum valid data level when the plurality of data levels correspond to amount of valid data present in the one or more storage segments. **In** an embodiment, when the workload is write-intensive, the first delta range may be reduced by half.

**In** an embodiment, the delta range determining module 209 determines the second delta range from the plurality of endurance levels based on the one or more second parameters associated with the plurality of endurance levels and the workload (eg determined based on or as at least one difference between two second parameters indicating endurance levels). In an embodiment, the one or more second parameters correspond to maximum endurance level, minimum endurance level, and/or mean endurance level associated with the plurality of storage nodes. The delta range determining module 209 determines the second delta range as a difference between mean endurance level and minimum endurance level associated with the one or more storage nodes. Generally, the second delta range is determined based on the second parameters and further based on a workload. In an embodiment, when the workload is write-intensive, the second delta range may be reduced by half.

In an embodiment, the identifying module 210 may be configured to identify one or more source nodes among the plurality of storage nodes based on the first delta range. For example, in an embodiment, when the first delta range is identified as the difference between maximum invalid data level and mean invalid data level, in Table 1, all the storage nodes that may fall within this range may be considered as the one or more source nodes. For example, in another embodiment, when the first delta range is identified as the difference between mean valid data level and minimum valid data level, in Table 2, all the storage nodes that may fall within this range may be considered as the one or more source nodes. Generally, embodiments identify as source node(s) one or more, eg all, nodes that have a characteristic value falling within - optionally including the minimum and maximum values of - the first delta range.

In an embodiment, the identifying module 210 may be configured to identify one or more destination nodes among the plurality of storage nodes based on the second delta range. For example, in an embodiment, when the second delta range is identified as the difference between mean endurance level and minimum endurance level, in Table 3, all the storage nodes that may fall within this range may be considered as the one or more destination nodes. Generally, embodiments identify as destination node(s) one or more, eg all, nodes that have a characteristic value falling within - optionally including the minimum and maximum values of - the second delta range.

In an embodiment, the QPC determining module 211 may be configured to identify a set of storage node pairs among the one or more source nodes and the one or more destination nodes based on a QPC. The QPC corresponds to a number of network hops required to establish a data path between a source node and a destination node of a storage node pair of the set of storage node pairs. In an embodiment, the maximum possible QPC (may be defined as 'Z') may be predefined. In another embodiment, the maximum possible QPC may be user defined and may be received via I/O interface 201 from a user. The QPC determining module 211 may be configured to set the maximum possible QPC. For example, the QPC determining module 211 may be configured to identify a set of storage node pairs for all possible (i.e., from zero to 'Z') QPC's. In an embodiment, the reclamation module 213 may be configured to perform reclamation of at least one storage segment among the set of storage node pairs.

In general, the reclamation process is an iterative method and is performed until the predefined number of segments are reclaimed.

In an embodiment, the QPC determining module 211 may be configured to initialize QPC to zero. The QPC determining module 211 may be configured to set the maximum possible QPC. The QPC determining module 211 may be configured to determine one or more storage node pairs among the set of storage node pairs based on the QPC, i.e., if the current QPC value is one, the QPC determining module 211 may identify storage node pairs among the set of storage node pairs with QPC value one.

In an example scenario, if QPC is one, then storage node pairs where a data path between a source node with a storage segment that may be reclaimed and a destination node with a storage segment that has free storage space of a storage node pair may be established with one network hop may be determined. For example, in Fig. 5, if a source node 504a has a source storage segment 501₁ and a destination node 504b has a destination storage segment 501₅, a data path may be established between the two segments for transfer of valid data, resulting in a QPC of one.

In another example scenario, if QPC is zero, a storage node pair, for example, source node and destination node, which may be the same storage node may be determined. More specifically, there may be two storage segments within the same storage node for which QPC is zero, i.e., the number of network hops is zero. Therefore, a source storage segment and destination storage segment are identified within the same source node, i.e., a storage node corresponding to the source storage segment and a storage node corresponding to the destination storage segment may be the same. For example, in Fig. 5, if a storage node 504c has a source storage segment 501₂ and a destination storage segment 501₆, a data path may be established between the two segments (i.e., 501₂ and 501₆) for transfer of valid data, resulting in a QPC of zero. In this scenario, the source node and the destination node of the storage node pair correspond to the same storage node, i.e., the source node is 504c and the destination node is 504c and the storage node pair is 504c-504c.

The above-defined example scenarios are not to be construed as a limitation and, as in other embodiments, zero QPC may be defined as a network hop between two storage nodes within a storage cluster.

In an embodiment, the REC determining module 212 may be configured to determine a Reclaim Efficiency Coefficient (REC) of each storage node pair of the one or more storage node pairs determined by the QPC determining module 211. The REC corresponds to (e.g., indicates) a number of storage segments that can be reclaimed from a source node of each storage node pair. For example, if, in Table 1, storage node 1 with three storage segments with 80-99% invalid data and two storage segments with 0-19% invalid data is identified as the source node and in Table 3, storage node 2 with endurance level between 20-39% is identified as the destination node (with an available destination storage segment), then the REC of the storage node pair, i.e., storage node 1-storage node 2 may be five, as five segments in the source node (storage node 1) may be reclaimed.

In another embodiment, the REC determining module 212 may be configured to arrange the one or more storage node pairs based on the descending order of REC associated with each of them.

In an embodiment, the reclamation module 213 may be configured to perform reclamation of at least one storage segment among the one or more storage node pairs.

In an embodiment, the reclamation module 213 may be configured to perform reclamation of the at least one storage segment of a source node of the one or more storage node pairs based at least on the REC.

In another embodiment, the reclamation module 213 may be configured to perform reclamation of the at least one storage segment of a source node of the one or more storage node pairs arranged based on the descending order of REC associated with each of them.

In an embodiment, the reclamation module 213 may be configured to update the data levels and endurance levels associated with the one or more storage node pairs after reclamation. In an embodiment, the reclamation module 213 may be configured to determine a number of storage segments (for, e.g., 'Y' number of segments) based on the reclamation of the at least one storage segment of the one or more storage node pairs. In an embodiment, if a predefined number (for, e.g., 'X') of segments are required to be reclaimed, and 'Y' is lesser than 'X', the reclamation module 213 may be configured to increment the QPC and communicate to the processor 102 or identifying module 210 that the method flow may need to be repeated. In general, the reclamation process is an iterative method and is performed until the predefined number of storage segments are reclaimed.

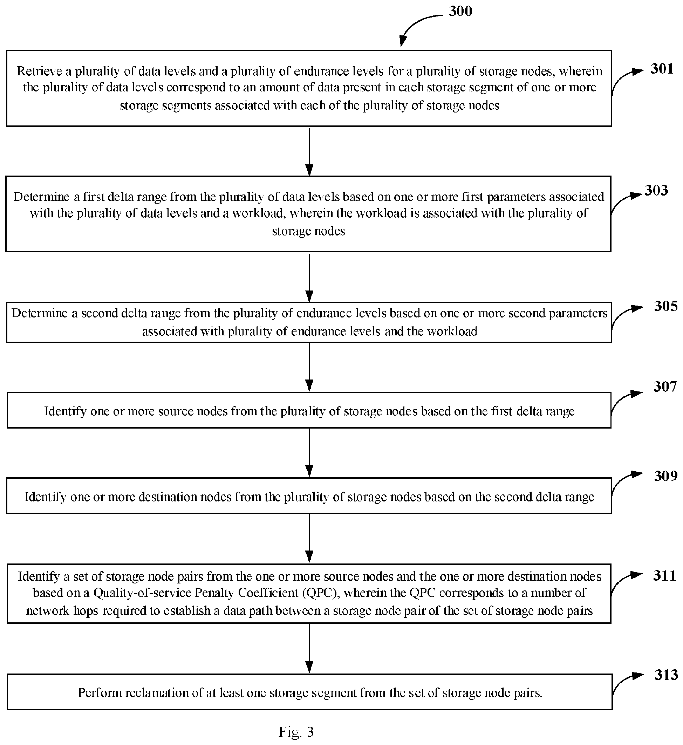

Fig. 3 depicts a flow diagram of an example method 300 for dynamically reclaiming storage space in a disaggregated storage system such as, the disaggregated storage system 104.

At step 301, the processor 102 of the system 101 may be configured to retrieve a plurality of data levels and a plurality of endurance levels of a plurality of storage nodes. In an embodiment, the plurality of data levels corresponds to the amount of data present in each storage segment of one or more storage segments associated with each of the plurality of storage nodes. In an embodiment, the plurality of data levels corresponds to one of: an amount of invalid data present in the one or more storage segments and an amount of valid data present in the one or more storage segments. In an embodiment, the plurality of data levels and the plurality of endurance levels are dynamically updated.

At step 303, the processor 102 of the system 101 may be configured to determine a first delta range from the plurality of data levels based on one or more first parameters associated with the plurality of data levels and a workload. In an embodiment, the workload is associated with the plurality of storage nodes. In an embodiment, the workload is one of a read-intensive workload and a write-intensive workload. In an embodiment, the one or more first parameters corresponds to maximum invalid data level, minimum invalid data level, mean invalid data level, maximum valid data level, minimum valid data level, and/or mean valid data level associated with the plurality of storage nodes.

In an embodiment, the processor 102 of the system 101 may be configured to determine the first delta range based on one or more first parameters (eg determined based on or as at least one difference between two first parameters indicating data levels) such as, without limitation, the maximum invalid data level, minimum invalid data level, and/or mean invalid data level. The processor 102 determines the first delta range as a difference between maximum invalid data level and mean invalid data level when the plurality of data levels correspond to amount of invalid data present in the one or more storage segments. In an embodiment, when the workload is write-intensive, the first delta range may be reduced by half.

In another embodiment, the processor 102 of the system 101 may be configured to determine the first delta range based on one or more first parameters (eg determined based on or as at least one difference between two first parameters indicating data levels) such as, without limitation, the maximum valid data level, minimum valid data level, and/or mean valid data level. The processor 102 determines the first delta range as a difference between mean valid data level and minimum valid data level when the plurality of data levels correspond to amount of valid data present in the one or more storage segments. In an embodiment, when the workload is write-intensive, the first delta range may be reduced by half.

At step 305, the processor 102 of the system 101 may be configured to determine a second delta range from the plurality of endurance levels based on one or more second parameters associated with the plurality of endurance levels and the workload (eg determined based on or as at least one difference between two second parameters indicating endurance levels). The one or more second parameters correspond to maximum endurance level, minimum endurance level, and/or mean endurance level associated with the plurality of storage nodes. The second delta range corresponds to a difference between mean endurance level and minimum endurance level.

In an embodiment, the processor 102 of the system 101 may be configured to determine the second delta range from the plurality of endurance levels based on one or more second parameters associated with the plurality of endurance levels and the workload (eg determined based on or as at least one difference between two second parameters indicating endurance levels). In an embodiment, the one or more second parameters correspond to maximum endurance level, minimum endurance level, and/or mean endurance level associated with the plurality of storage nodes. The processor 102 determines the second delta range as a difference between mean endurance level and minimum endurance level associated with the one or more storage nodes. In an embodiment, when the workload is write-intensive, the second delta range may be reduced by half.

At step 307, the processor 102 of the system 101 may be configured to identify one or more source nodes among the plurality of storage nodes based on the first delta range. For example, in an embodiment, when the first delta range is identified as the difference between maximum invalid data level and mean invalid data level, in Table 1, all the storage nodes that may fall within this range may be considered as the one or more source nodes. In another embodiment, when the first delta range is identified as the difference between mean valid data level and minimum valid data level, in Table 2, all the storage nodes that may fall within this range may be considered as the one or more source nodes.

At step 309, the processor 102 of the system 101 may be configured to identify one or more destination nodes among the plurality of storage nodes based on the second delta range. For example, in an embodiment, when the second delta range is identified as the difference between mean endurance level and minimum endurance level, in Table 3, all the storage nodes that may fall within this range may be considered as the one or more destination nodes.

At step 311, the processor 102 of the system 101 may be configured to identify a set of storage node pairs among the one or more source nodes and the one or more destination nodes based on a QPC. In an embodiment, the maximum possible QPC (may be defined as 'Z') may be predefined. In another embodiment, the maximum possible QPC may be user defined and may be received via I/O interface 201 from a user. In an embodiment, the processor 102 may be configured to initialize QPC to zero. The processor 102 may be configured to set the maximum possible QPC. The processor 102 may then be configured to determine one or more storage node pairs among the set of storage node pairs based on the QPC. In an example scenario, if QPC is one, then storage node pairs where a data path between a source node (with a segment that may be reclaimed) and a destination node (with a segment with free storage space) of a storage node pair may be established with one network hop may be determined. For example, in Fig. 5, if a source node 504a has a source storage segment 501₁ and a destination node 504b has a destination storage segment 501₅, a data path may be established between the two segments for transfer of valid data, resulting in a QPC of one.

In another example scenario, if QPC is zero, a storage node pair, for example, source node and destination node, which may be the same storage node may be determined. More specifically, there may be two storage segments within the same storage node for which QPC is zero, i.e., the number of network hops is zero. Therefore, a source storage segment and destination storage segment are identified within the same source node, i.e., a storage node corresponding to the source storage segment and a storage node corresponding to the destination storage segment may be the same. For example, in Fig. 5, if a storage node 504c has a source storage segment 501₂ and a destination storage segment 501₆, a data path may be established between the two segments for transfer of valid data, resulting in a QPC of zero. In this scenario, the source node and the destination node of the storage node pair correspond to the same storage node, i.e., the source node is 504c and the destination node is 504c and the storage node pair is 504c-504c.

In another embodiment, the processor 102 may be configured to initialize QPC to zero. The processor 102 may be configured to set the maximum possible QPC. The processor 102 may be configured to determine one or more storage node pairs among the set of storage node pairs identified at step 311 based on the QPC, i.e., if the current QPC value is one, the QPC determining module 211 may identify storage node pairs among the set of storage node pairs with QPC value one.

In an embodiment, the processor 102 may be configured to determine a Reclaim Efficiency Coefficient (REC) of each storage node pair of the one or more storage node pairs determined by the processor 102.

In another embodiment, the processor 102 may be configured to arrange the one or more storage node pairs based on the descending order of REC associated with each of them.

At step 313, the processor 102 of the system 101 may be configured to perform reclamation of at least one storage segment among the set of storage node pairs.

In an embodiment, the processor 102 may be configured to perform reclamation of the at least one storage segment of a source node of the one or more storage node pairs based at least on the REC.

In another embodiment, the processor 102 may be configured to perform reclamation of the at least one storage segment of a source node of the one or more storage node pairs arranged based on the descending order of REC associated with each of them.

In an embodiment, the processor 102 may be configured to update (e.g., dynamically update) the data levels and endurance levels associated with the least one storage node pair among the set of storage node pairs. In an embodiment, the processor 102 may be configured to determine a number of storage segments (for, e.g., 'Y' number of segments) based on the reclamation of the at least one storage segment of the one or more storage node pairs. In an embodiment, if a predefined number (for, e.g., 'X') of segments are required to be reclaimed, and 'Y' is lesser than 'X', the processor 102 may be configured to increment the QPC and repeat steps from step 311 onwards.

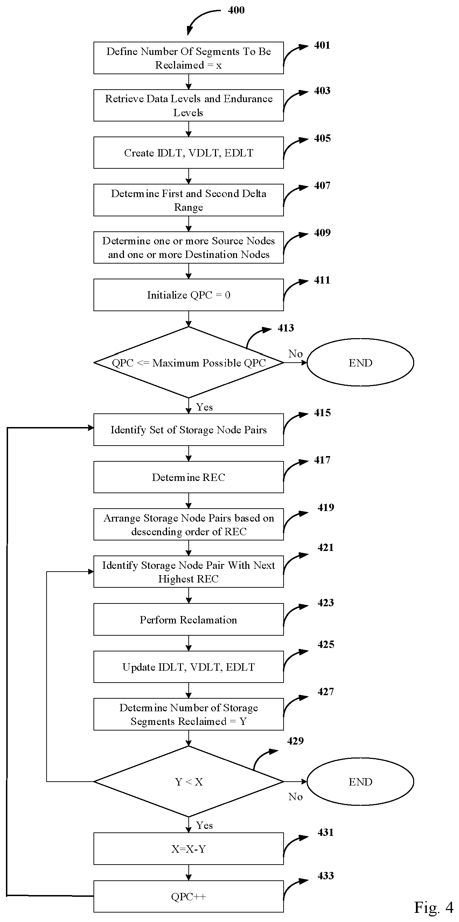

Fig. 4 depicts a flowchart 400 of an example method for dynamically reclaiming storage space in a disaggregated storage system, which may be performed by the system 101.

At step 401, the system 101 may be configured to set the number of segments that need to be reclaimed/ compacted. In an embodiment, the number of segments that need to be reclaimed may be predefined. In another embodiment, the number of segments that need to be reclaimed may be user defined and may be received via I/O interface 201 from a user. For example, the number of segments that need to be reclaimed may be 'X'.

At step 403, the system 101 may be configured to retrieve a plurality of data levels and a plurality of endurance levels 106 for a plurality of storage nodes of the one or more storage clusters 105₁, 105₂, ..., 105ₙ of the disaggregated storage system 104 and may store it in the memory 103 as data levels and endurance levels 106.

At step 405, the system 101 may be configured to create an endurance level table 205 and one of an invalid data level table 203 and a valid data level table 204 from the data levels and endurance levels 106.

At step 407, the system 101 may be configured to determine a first delta range and a second delta range.
The system 101 may be configured determine the first delta range from the plurality of data levels based on one or more first parameters associated with the plurality of data levels and a workload. **In** an embodiment, the workload is associated with the plurality of storage nodes. In an embodiment, the workload is one of a read-intensive workload and a write-intensive workload. In an embodiment, the one or more first parameters corresponds to maximum invalid data level, minimum invalid data level, mean invalid data level, maximum valid data level, minimum valid data level, and/or mean valid data level associated with the plurality of storage nodes.

In an embodiment, the system 101 may be configured to determine the first delta range based on one or more first parameters (eg determined based on or as at least one difference between two first parameters indicating data levels) such as, without limitation, the maximum invalid data level, minimum invalid data level, and/or mean invalid data level. The system 101 determines the first delta range as a difference between maximum invalid data level and mean invalid data level when the plurality of data levels correspond to amount of invalid data present in the one or more storage segments. In an embodiment, when the workload is write-intensive, the first delta range may be reduced by half.

In another embodiment, the system 101 may be configured to determine the first delta range based on one or more first parameters (eg determined based on or as at least one difference between two first parameters indicating data levels) such as, without limitation, the maximum valid data level, minimum valid data level, and/or mean valid data level. The system 101 determines the first delta range as a difference between mean valid data level and minimum valid data level when the plurality of data levels correspond to amount of valid data present in the one or more storage segments. In an embodiment, when the workload is write-intensive, the first delta range may be reduced by half.

In an embodiment, the system 101 may be configured to determine a second delta range from the plurality of endurance levels based on one or more second parameters associated with the plurality of endurance levels and the workload (eg determined based on or as at least one difference between two second parameters indicating endurance levels). The one or more second parameters correspond to maximum endurance level, minimum endurance level, and/or mean endurance level associated with the plurality of storage nodes. The second delta range corresponds to a difference between mean endurance level and minimum endurance level.

In an embodiment, the system 101 may be configured to determine the second delta range from the plurality of endurance levels based on one or more second parameters associated with the plurality of endurance levels and the workload (eg determined based on or as at least one difference between two second parameters indicating endurance levels). In an embodiment, the one or more second parameters correspond to maximum endurance level, minimum endurance level, and/or mean endurance level associated with the plurality of storage nodes. The system 101 determines the second delta range as a difference between mean endurance level and minimum endurance level associated with the one or more storage nodes. In an embodiment, when the workload is write-intensive, the second delta range may be reduced by half.

At step 409, the system 101 may be configured to identify one or more source nodes and one or more destination nodes. The system 101 may be configured to identify one or more source nodes among the plurality of storage nodes based on the first delta range. For example, in an embodiment, when the first delta range is identified as the difference between maximum invalid data level and mean invalid data level, in Table 1, all the storage nodes that may fall within this range may be considered as the one or more source nodes. In another embodiment, when the first delta range is identified as the difference between mean valid data level and minimum valid data level, in Table 2, all the storage nodes that may fall within this range may be considered as the one or more source nodes.

In an embodiment, the system 101 may be configured to identify one or more destination nodes among the plurality of storage nodes based on the second delta range. For example, in an embodiment, when the second delta range is identified as the difference between mean endurance level and minimum endurance level, in Table 3, all the storage nodes that may fall within this range may be considered as the one or more destination nodes.

At step 411, the system 101 may be configured to initialize QPC at/to zero. In an embodiment, the maximum possible QPC (may be defined as 'Z') may be predefined. In another embodiment, the maximum possible QPC may be user defined and may be received via I/O interface 201 from a user. For example, Z may be defined as five.

At step 413, the system 101 may be configured to check if the maximum possible QPC value has been attained. If QPC is lesser than or equal to 'Z', steps 415- 429 may be performed by the system 101. If QPC is greater than 'Z', the system 101 may be configured to terminate the method flow.

At step 415, the system 101 may be configured to identify a set of storage node pairs among the one or more source nodes and the one or more destination nodes based on a QPC. The system 101 may then be configured to select/determine one or more storage node pairs among the set of storage node pairs based on the QPC. In an embodiment, the system 101 may be configured to initialize QPC at/to zero. In an embodiment, the maximum possible QPC (may be defined as 'Z') may be predefined. In another embodiment, the maximum possible QPC may be user defined and may be received via I/O interface 201 from a user. The system 101 may be configured to set the maximum possible QPC. The system 101 may then be configured to select/determine one or more storage node pairs among the set of storage node pairs based on the QPC. In an example scenario, if QPC is one, then storage node pairs where a data path between a source node (with a segment that may be reclaimed) and a destination node (with a segment with free storage space) of a storage node pair may be established with one network hop may be determined. For example, in Fig. 5, if a source node 504a has a source storage segment 501₁ and a destination node 504b has a destination storage segment 501₅, a data path may be established between the two segments for transfer of valid data, resulting in a QPC of one.

In another example scenario, if QPC is zero, a storage node pair, for example, source node and destination node, which may be the same storage node may be determined. More specifically, there may be two storage segments within the same storage node for which QPC is zero, i.e., the number of network hops is zero. Therefore, a source storage segment and destination storage segment are identified within the same source node, i.e., a storage node corresponding to the source storage segment and a storage node corresponding to the destination storage segment may be the same. For example, in Fig. 5, if a storage node 504c has storage a source storage segment 501₂ and a destination storage segment 501₆, a data path may be established between the two segments for transfer of valid data, resulting in a QPC of zero. In this scenario, the source node and the destination node of the storage node pair correspond to the same storage node, i.e., the source node is 504c and the destination node is 504c and the storage node pair is 504c-504c.

At step 417, the system 101 may be configured to determine REC of each storage node pair of the set of storage node pairs identified at step 415. For example, if, in Table 1, storage node 1 with three storage segments with 80-99% invalid data and two storage segments with 0-19% invalid data is identified as the source node and in Table 3, storage node 2 with endurance level between 20-39% is identified as the destination node (with an available destination storage segment), then the REC of the storage node pair, i.e., storage node 1-storage node 2 may be five, as five segments in the source node (storage node 1) may be reclaimed.

At step 419, the system 101 may be configured to identify at least one storage node pair among the set of storage node pairs based on the REC associated with each storage node pair of the set of storage node pairs.

In another embodiment, the system 101 may be configured to arrange the one or more storage node pairs based on the descending order of REC associated with each of them.

In an embodiment, the system 101 may be configured to identify at least one storage node pair among the set of storage node pairs based on the REC associated with each storage node pair of the one or more storage node pairs. In an example, the at least one storage node pair has the highest REC among the one or more storage node pairs.

In another embodiment, the system 101 may be configured to arrange the one or more storage node pairs based on the descending order of REC associated with each of them.

At step 421, the system 101 may be configured to identify at least one storage node pair (among the set of storage node pairs) having the next-highest REC.

At step 423, the system 101 may be configured to perform reclamation of the at least one storage segment of a source node of the at least one storage node pair based at least on the REC.

In another embodiment, the system 101 may be configured to perform reclamation of the at least one storage segment of a source node of the one or more storage node pairs arranged based on the descending order of REC associated with each of them.

At step 425, the system 101 may be configured to update the invalid data level table 203, the valid data level table 204, and the endurance level table 205.

At step 427, the system 101 may be configured to determine a number of storage segments (for, e.g., 'Y' number of reclaimed storage segments) based on the reclamation of the at least one storage segment of the one or more storage node pairs.

At step 429, the system 101 may be configured to check if 'Y' is lesser than 'X', i.e., number of reclaimed storage segments less than number of segments to be reclaimed. In an embodiment, if 'Y' is greater than 'X', the system 101 may terminate the method flow.

In an embodiment, if 'Y' is lesser than 'X', the system 101 may be configured to, at step 431, subtract the value of 'Y' from 'X' and update the value of 'X'.

In an embodiment if 'Y' is lesser than 'X', then at step 433, the system 101 may be configured to increment the QPC and repeat the method 400 from step 413-429.

Fig. 5 depicts an example scenario for reclamation of storage space in a disaggregated storage system, in accordance with some embodiments of the present disclosure. Fig. 5 discloses a cluster 500. In an embodiment, the cluster may comprise a data store 1 502a, a data store 2 502b, a storage node 1 504a, a storage node 2 504b, a storage node 3 504c and a and a storage node 4 504d. The storage node 1 504a and the storage node 2 504b may be connected via a switch 1 503a. The storage node 3 504c and the storage node 4 504d may be connected via a switch 2 503b.

In an embodiment, each storage node may have one or more storage segments associated with it. A storage segment may be a source storage segment (with valid data that needs to be moved to another segment and so that the segment may be reclaimed) or a destination storage segment (with free storage space, so that valid data may be moved into it). The storage node 504a has a source storage segment 501₁. The storage node 504b has a destination storage segment 501₅. The storage node 504c has a source storage segment 501₂ and a destination storage segment 501₆. The storage node 504d has a source storage segment 501₃ and a destination storage segment 501₄.

The storage node 504a may have an aggregated endurance level of 50%. The storage node 504b may have an aggregated endurance level of 40%. The storage node 504c may have an aggregated endurance level of 40%. The storage node 504d may have an aggregated endurance level of 30%.

In an embodiment, if the storage node 504c has storage the segment 501₂ at an endurance level of 20% and the segment 501₆ at an endurance level of 60% endurance, then the endurance level of the storage node 504c may be the aggregated value of the individual storage segments, i.e., the endurance level of the storage node 504c is 40%. In an embodiment, the endurance level is indicated as an aggregated value of endurance levels of individual storage segments of the storage node. However, endurance level may be determined by other means.

In another embodiment, if a source node 504a has a source storage segment 501₁ and a destination node 504b has a destination storage segment 501₅, a data path may be established between the two segments for transfer of valid data, resulting in a QPC of one.

In another embodiment, if QPC is zero, a storage node pair, for example, source node and destination node, which may be the same storage node may be determined. More specifically, there may be two storage segments within the same storage node for which QPC is zero, i.e., the number of network hops is zero. Therefore, a source storage segment and destination storage segment are identified within the same source node, i.e., a storage node corresponding to the source storage segment and a storage node corresponding to the destination storage segment may be the same. For example, if the storage node 504c has the source storage segment 501₂ and the destination storage segment 501₆, a data path may be established between the two segments for transfer of valid data, resulting in a QPC of zero. In this scenario, the source node and the destination node of the storage node pair correspond to the same storage node, i.e., the source node is 504c and the destination node is 504c and the storage node pair is 504c-504c.

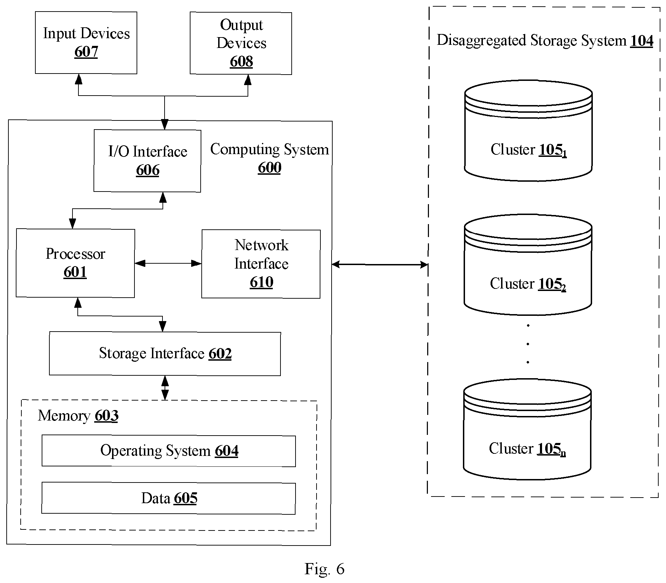

Fig. 6 illustrates a block diagram of an example computing system 600 for implementing embodiments consistent with the present disclosure. The computing system 600 may be, without limitation, the system 101. The computing system 600 may include a central processing unit ("CPU" or "processor") 601. The processor 601 may include at least one data processor for executing processes. The processor 601 may include specialized processing units such as, integrated system (bus) controllers, memory management control units, floating point units, graphics processing units, digital signal processing units, etc.

The processor 601 may be disposed in communication with one or more input/output (I/O) devices 607 and 608 via I/O interface 606. The I/O interface 606 may employ communication protocols/methods such as, without limitation, audio, analogue, digital, monaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 606, the computing system 600 may communicate with one or more I/O devices 607 and 608. For example, the input devices 607 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output devices 608 may be a printer, fax machine, video display (e.g., cathode ray tube (CRT), liquid crystal display (LCD), light-emitting diode (LED), plasma, plasma display panel (PDP), organic light-emitting diode display (OLED) or the like), audio speaker, etc.

In some embodiments, the processor 601 may be disposed in communication with external elements such as external computer systems, servers, network elements. The network interface 610 may employ connection protocols including, without limitation, direct connect, ethernet (e.g., twisted pair 10/100/1000 Base T), transmission control protocol/internet protocol (TCP/IP), token ring, IEEE 802.11a/b/g/n/x, etc.

In some embodiments, the processor 601 may be disposed in communication with a memory 603 (e.g., RAM, ROM, etc.) via a storage interface 602. The storage interface 602 may connect to memory 603 including, without limitation, memory drives, removable disc drives, etc., employing connection protocols such as serial advanced technology attachment (SATA), Integrated Drive Electronics (IDE), IEEE-1394, Universal Serial Bus (USB), fibre channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 603 may store a collection of program or database components, including, without limitation, an operating system 604, data 605, etc. In some embodiments, computing system 600 may store user/application data 605, such as the data, variables, records, etc., as described in this disclosure. Such databases may be implemented as fault-tolerant, relational, scalable, secure databases such as Oracle^{®} or Sybase^{®}.

The operating system 604 may facilitate resource management and operation of the computing system 600. Examples of operating systems include, without limitation, APPLE MACINTOSH^{®} OS X, UNIX^{®}, UNIX-like system distributions (e.g., BERKELEY SOFTWARE DISTRIBUTION^{™} (BSD), FREEBSD^{™}, NETBSD^{™}, OPENBSD^{™}, etc.), LINUX DISTRIBUTIONS^{™} (e.g., RED HAT^{™}, UBUNTU^{™}, KUBUNTU^{™}, etc.), IBM^{™} OS/2, MICROSOFT^{™} WINDOWS^{™} (XP^{™}, VISTA^{™}/7/8, 10 etc.), APPLE^{®} IOS^{™}, GOOGLE^{®} ANDROID^{™}, BLACKBERRY^{®} OS, or the like.

In some embodiments, the computing system 600 may be disposed in communication with the disaggregated storage system 104. The disaggregated storage system 104 may comprise one or more storage clusters 105₁, 105₂, ..., 105ₙ. The network interface 610 may employ connection protocols including, without limitation, direct connect, ethernet (e.g., twisted pair 10/100/1000 Base T), transmission control protocol/internet protocol (TCP/IP), token ring, IEEE 802.11a/b/g/n/x, etc, to communicate with the disaggregated storage system 104.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, CD ROMs, DVDs, flash drives, disks, and any other known physical storage media.

The described operations may be implemented as a method, system or article of manufacture using standard programming and/or engineering techniques to produce software, firmware, hardware, or any combination thereof. The described operations may be implemented as code maintained in a "non-transitory computer readable medium", where a processor may read and execute the code from the computer readable medium. The processor is at least one of a microprocessor and a processor capable of processing and executing the queries. A non-transitory computer readable medium may include media such as magnetic storage medium (e.g., hard disk drives, floppy disks, tape, etc.), optical storage (CD-ROMs, DVDs, optical disks, etc.), volatile and non-volatile memory devices (e.g., EEPROMs, ROMs, PROMs, RAMs, DRAMs, SRAMs, Flash Memory, firmware, programmable logic, etc.), etc. Further, non-transitory computer-readable media may include all computer-readable media except for something transitory. The code implementing the described operations may further be implemented in hardware logic (e.g., an integrated circuit chip, Programmable Gate Array (PGA), Application Specific Integrated Circuit (ASIC), etc.).

An "article of manufacture" includes non-transitory computer readable medium, and/or hardware logic, in which code may be implemented. A device in which the code implementing the described embodiments of operations is encoded may include a computer readable medium or hardware logic. Of course, those skilled in the art will recognize that many modifications may be made to this configuration without departing from the scope of the invention as defined by the claims, and that the article of manufacture may include suitable information bearing medium known in the art.

The above described one or more embodiments, may have the advantageous effect that, reclamation of storage space does not affect the QoS of cluster resources, while maximum amount of source storage segments/nodes are freed up for further usage. This is achieved because embodiments as disclosed in the present disclosure factor in (e.g., account for) various factors such as QPC and REC along with endurance levels and data levels while performing reclamation of storage segments of storage nodes. A further advantage of embodiments of the present disclosure is the decrease in dispersion of valid data due to nature of disaggregated storage systems.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary, a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of Figures 3 and 4 show certain events occurring in a certain order. In alternative embodiments, certain operations may be performed in a different order, modified, or removed. Moreover, steps may be added to the above-described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the scope being indicated by the following claims.

## Claims

1. A method for dynamically reclaiming storage space in a disaggregated storage system (104), the method comprising:
retrieving a plurality of data levels and a plurality of endurance levels of a plurality of storage nodes (504a - 504d), wherein each data level of the plurality of data levels corresponds to an amount of data present in each storage segment of one or more storage segments (501₁ - 501₆) associated with each of the plurality of storage nodes;
determining a first delta range based on a difference between first parameters and on a workload, wherein the first parameters are each based on the plurality of data levels, wherein the workload is associated with the plurality of storage nodes;
determining a second delta range based on a difference between second parameters and on the workload, wherein the second parameters are each based on the plurality of endurance levels;
identifying one or more source nodes (504a) among the plurality of storage nodes based on the first delta range;
identifying one or more destination nodes (504b) among the plurality of storage nodes based on the second delta range;
identifying a set of storage node pairs, among the one or more source nodes (504a) and the one or more destination nodes (504b), based on a Quality-of-service Penalty Coefficient, QPC, wherein the QPC corresponds to a number of network hops required to establish a data path between the two storage nodes in a storage node pair of the set of storage node pairs; and
performing reclamation of at least one storage segment (501₁ - 501₆) among the set of storage node pairs.

2. The method as claimed in claim 1, wherein performing reclamation of the at least one storage segment (501₁ - 501₆) comprises:
initializing the QPC to zero; and
iteratively performing following steps until a predefined number of storage segments (501₁ - 501₆) have been reclaimed among the set of storage node pairs:
determining one or more storage node pairs among the set of storage node pairs based on the QPC;
determining a Reclaim Efficiency Coefficient, REC, of each storage node pair of the one or more storage node pairs, wherein the REC corresponds to a number of storage segments (501₁ - 501₆) that can be reclaimed from a source node (504a) of each storage node pair;
performing reclamation of the at least one storage segment from a source node (504a) of the one or more storage node pairs, based on the REC;
updating data levels and endurance levels associated with the one or more storage node pairs;
determining a number of storage segments (501₁ - 501₆) based on the reclamation of the at least one storage segment of the one or more storage node pairs; and
incrementing the QPC.

3. The method as claimed in claim 1 or 2, wherein the plurality of data levels corresponds to one of:
an amount of invalid data present in the one or more storage segments (501₁ - 501₆); or
an amount of valid data present in the one or more storage segments (501₁ - 501₆).

4. The method as claimed in any one of the preceding claims, wherein the plurality of data levels and the plurality of endurance levels are dynamically updated.

5. The method as claimed in any one of the preceding claims, wherein the one or more first parameters comprise a maximum invalid data level, a minimum invalid data level, a mean invalid data level, a maximum valid data level, a minimum valid data level, and/or a mean valid data level associated with the plurality of storage nodes.

6. The method as claimed in any one of the preceding claims, wherein the first delta range comprises:
a difference between one of said first parameters that is a maximum invalid data level and another one of said first parameters that is a mean invalid data level when the plurality of data levels correspond to an amount of invalid data present in the one or more storage segments (501₁ - 501₆); or
a difference between one of said first parameters that is a mean valid data level and another one of said first parameters that is a minimum valid data level when the plurality of data levels correspond to an amount of valid data present in the one or more of storage segments (501₁ - 501₆).

7. The method as claimed in any one of the preceding claims, wherein the one or more second parameters comprise a maximum endurance level, a minimum endurance level, and/or a mean endurance level associated with the plurality of storage nodes.

8. The method as claimed in any one of the preceding claims, wherein the second delta range comprises a difference between one of said second parameters that is a mean endurance level and another one of said second parameters that is a minimum endurance level.

9. The method as clamed in any one of the preceding claims, wherein the workload comprises a read-intensive workload or a write-intensive workload.

10. The method as clamed in claim 9, wherein the first delta range and the second delta range are reduced by half when the workload is the write-intensive workload.

11. A system for dynamically reclaiming storage space in a disaggregated storage system, the system for dynamically reclaiming storage space comprising:
a memory; and
a processor configured to:
retrieve a plurality of data levels and a plurality of endurance levels of a plurality of storage nodes, wherein each data level of the plurality of data levels corresponds to an amount of data present in each storage segment of one or more storage segments (501₁ - 501₆) associated with each of the plurality of storage nodes;
determine a first delta range based on a difference between first parameters and on a workload, wherein the first parameters are each based on the plurality of data levels, wherein the workload is associated with the plurality of storage nodes;
determine a second delta range based on a difference between second parameters and on a workload, wherein the second parameters are each based on the plurality of endurance levels;
identify one or more source nodes (504a) among the plurality of storage nodes based on the first delta range;
identify one or more destination nodes (504b) among the plurality of storage nodes based on the second delta range;
identify a set of storage node pairs, among the one or more source nodes (504a) and the one or more destination nodes (504b), based on a Quality-of-service Penalty Coefficient, QPC, wherein the QPC corresponds to a number of network hops required to establish a data path between the two storage nodes in a storage node pair of the set of storage node pairs; and
perform reclamation of at least one storage segment (501₁ - 501₆) among the set of storage node pairs.

12. The system as claimed in claim 11, wherein the processor is configured to perform the reclamation of the at least one storage segment (501₁ - 501₆) by:
initializing the QPC to zero; and
iteratively performing following steps until a predefined number of storage segments (501₁ - 501₆) have been reclaimed among the set of storage node pairs:
determine one or more storage node pairs among the set of storage node pairs based on the QPC;
determine a Reclaim Efficiency Coefficient, REC, of each storage node pair of the one or more storage node pairs, wherein the REC corresponds to a number of storage segments (501₁ - 501₆) that can be reclaimed from a source node (504a) of each storage node pair;
perform reclamation of the at least one storage segment (501₁ - 501₆) from a source node (504a) of the one or more storage node pairs, based on the REC;
update data levels and endurance levels associated with the one or more storage node pairs;
determine a number of storage segments (501₁ - 501₆) based on the reclamation of the at least one storage segment of the one or more storage node pairs; and
increment the QPC.

13. The system as claimed in claim 11 or 12, wherein the plurality of data levels comprises:
an amount of invalid data present in the one or more storage segments (501₁ - 501₆); or
an amount of valid data present in the one or more storage segments (501₁ - 501₆).

14. The system as claimed in claim 12 and preferably in claim 13, wherein the processor is configured to dynamically update the plurality of data levels and the plurality of endurance levels.

15. A system as claimed in claim 11, wherein the processor is further configured to:
perform the reclamation of the at least one storage segment of the storage node pair of the set of storage node pairs, based on said Reclaim Efficiency Coefficient, REC, of the storage node pair of the set of storage node pairs, wherein the REC corresponds to a number of storage segments that can be reclaimed from the storage node pair of the set of storage node pairs.

## Patentansprüche

1. Verfahren zum dynamischen Zurückgewinnen von Speicherplatz in einem disaggregierten Speichersystem (104), wobei das Verfahren Folgendes umfasst:
Abrufen einer Vielzahl von Datenebenen und einer Vielzahl von Ausdauerpegeln einer Vielzahl von Speicherknoten (504a - 504d), wobei jede Datenebene der Vielzahl von Datenebenen einer Datenmenge entspricht, die in jedem Speichersegment eines oder mehrerer Speichersegmente (501₁ - 501₆) vorhanden ist, die jedem der Vielzahl von Speicherknoten zugeordnet sind;
Bestimmen eines ersten Delta-Bereichs basierend auf einer Differenz zwischen ersten Parametern und einer Arbeitslast, wobei die ersten Parameter jeweils auf der Vielzahl von Datenpegeln basieren, wobei die Arbeitslast der Vielzahl von Speicherknoten zugeordnet ist;
Bestimmen eines zweiten Delta-Bereichs basierend auf einer Differenz zwischen zweiten Parametern und der Arbeitslast, wobei die zweiten Parameter jeweils auf der Vielzahl von Ausdauerpegeln basieren;
Identifizieren eines oder mehrerer Quellknoten (504a) unter der Vielzahl von Speicherknoten basierend auf dem ersten Delta-Bereich;
Identifizieren eines oder mehrerer Zielknoten (504b) unter der Vielzahl von Speicherknoten basierend auf dem zweiten Delta-Bereich;
Identifizieren eines Satzes von Speicherknotenpaaren unter dem einen oder den mehreren Quellknoten (504a) und dem einen oder den mehreren Zielknoten (504b) basierend auf einem Dienstgüte-Strafkoeffizienten (QPC), wobei der QPC einer Anzahl von Netzwerk-Hops entspricht, die erforderlich sind, um einen Datenpfad zwischen den beiden Speicherknoten in einem Speicherknotenpaar des Satzes von Speicherknotenpaaren herzustellen; und
Durchführen einer Rückgewinnung von mindestens einem Speichersegment (501₁ - 501₆) aus dem Satz von Speicherknotenpaaren.

2. Verfahren nach Anspruch 1, wobei das Durchführen einer Rückgewinnung des mindestens einen Speichersegments (501₁-501₆) Folgendes umfasst:
Initialisieren des QPC auf Null; und
iteratives Ausführen der folgenden Schritte, bis eine vordefinierte Anzahl von Speichersegmenten (501₁-501₆) aus dem Satz von Speicherknotenpaaren zurückgewonnen wurde:
Bestimmen eines oder mehrerer Speicherknotenpaare aus dem Satz von Speicherknotenpaaren basierend auf dem QPC;
Bestimmen eines Rückgewinnungseffizienzkoeffizienten, REC, für jedes Speicherknotenpaar des einen oder der mehreren Speicherknotenpaare, wobei der REC einer Anzahl von Speichersegmenten (501₁ - 501₆) entspricht, die von einem Quellknoten (504a) jedes Speicherknotenpaares zurückgewonnen werden können;
Durchführen einer Rückgewinnung des mindestens einen Speichersegments von einem Quellknoten (504a) des einen oder der mehreren Speicherknotenpaare basierend auf dem REC;
Aktualisieren der Datenpegel und Ausdauerpegel, die einem oder mehreren Speicherknotenpaaren zugeordnet sind;
Bestimmen einer Anzahl von Speichersegmenten (501₁ - 501₆) basierend auf der Rückgewinnung des mindestens einen Speichersegments des einen oder der mehreren Speicherknotenpaare; und
Erhöhen des QPC.

3. Verfahren nach Anspruch 1 oder 2, wobei die Vielzahl von Datenpegeln einem der Folgenden entspricht:
einer Menge ungültiger Daten, die in dem einen oder den mehreren Speichersegmenten vorhanden sind (501₁ - 501₆); oder einer Menge gültiger Daten, die in dem einen oder den mehreren Speichersegmenten vorhanden sind (501₁ - 501₆).

4. Verfahren nach einem der vorstehenden Ansprüche, wobei die Vielzahl von Datenpegeln und die Vielzahl von Ausdauerpegeln dynamisch aktualisiert werden.

5. Verfahren nach einem der vorstehenden Ansprüche, wobei der eine oder die mehreren ersten Parameter einen maximalen ungültigen Datenpegel, einen minimalen ungültigen Datenpegel, einen mittleren ungültigen Datenpegel, einen maximalen gültigen Datenpegel, einen minimalen gültigen Datenpegel und/oder einen mittleren gültigen Datenpegel umfassen, die der Vielzahl von Speicherknoten zugeordnet sind.

6. Verfahren nach einem der vorstehenden Ansprüche, wobei der erste Delta-Bereich Folgendes umfasst:
eine Differenz zwischen einem der Parameter, der einen maximalen ungültigen Datenpegel darstellt, und einem anderen der ersten Parameter, der einen mittleren ungültigen Datenpegel darstellt, wenn die Vielzahl von Datenpegeln einer Menge ungültiger Daten entspricht, die in dem einen oder den mehreren Speichersegmenten vorhanden sind (501₁ - 501₆); oder
eine Differenz zwischen einem der ersten Parameter, der einen mittleren gültigen Datenpegel darstellt, und einem anderen der ersten Parameter, der einen minimalen gültigen Datenpegel darstellt, wenn die Vielzahl von Datenpegeln einer Menge gültiger Daten entspricht, die in einem oder mehreren Speichersegmenten (501₁ - 501₆).

7. Verfahren nach einem der vorstehenden Ansprüche, wobei der eine oder die mehreren zweiten Parameter einen maximalen Ausdauerpegel, einen minimalen Ausdauerpegel und/oder einen mittleren Ausdauerpegel umfassen, die der Vielzahl von Speicherknoten zugeordnet sind.

8. Verfahren nach einem der vorstehenden Ansprüche, wobei der zweite Delta-Bereich eine Differenz zwischen einem der zweiten Parameter, der ein mittlerer Ausdauerpegel ist, und einem anderen der zweiten Parameter, der ein minimaler Ausdauerpegel ist, umfasst.

9. Verfahren nach einem der vorstehenden Ansprüche, wobei die Arbeitslast eine leseintensive Arbeitslast oder eine schreibintensive Arbeitslast umfasst.

10. Verfahren nach Anspruch 9, wobei der erste Delta-Bereich und der zweite Delta-Bereich um die Hälfte reduziert sind, wenn die Arbeitslast eine schreibintensive Arbeitslast ist.

11. System zum dynamischen Zurückgewinnen von Speicherplatz in einem disaggregierten Speichersystem, wobei das System zum dynamischen Zurückgewinnen von Speicherplatz Folgendes umfasst:
einen Speicher; und
einen Prozessor, der konfiguriert ist zum:
Abrufen einer Vielzahl von Datenpegeln und einer Vielzahl von Ausdauerpegeln einer Vielzahl von Speicherknoten, wobei jeder Datenpegel der Vielzahl von Datenpegeln einer Datenmenge entspricht, die in jedem Speichersegment eines oder mehrerer Speichersegmente (501₁ - 501₆) vorhanden ist, die jedem der Vielzahl von Speicherknoten zugeordnet sind;
Bestimmen eines ersten Delta-Bereichs basierend auf einer Differenz zwischen ersten Parametern und einer Arbeitslast, wobei die ersten Parameter jeweils auf der Vielzahl von Datenpegeln basieren, wobei die Arbeitslast der Vielzahl von Speicherknoten zugeordnet ist;
Bestimmen eines zweiten Delta-Bereichs basierend auf einer Differenz zwischen zweiten Parametern und auf einer Arbeitslast, wobei die zweiten Parameter jeweils auf der Vielzahl von Ausdauerpegeln basieren;
Identifizieren eines oder mehrerer Quellknoten (504a) unter der Vielzahl von Speicherknoten basierend auf dem ersten Delta-Bereich;
Identifizieren eines oder mehrerer Zielknoten (504b) unter der Vielzahl von Speicherknoten basierend auf dem zweiten Delta-Bereich;
Identifizieren eines Satzes von Speicherknotenpaaren unter dem einen oder den mehreren Quellknoten (504a) und dem einen oder den mehreren Zielknoten (504b) basierend auf einem Dienstgüte-Strafkoeffizienten (QPC), wobei der QPC einer Anzahl von Netzwerk-Hops entspricht, die erforderlich sind, um einen Datenpfad zwischen den beiden Speicherknoten in einem Speicherknotenpaar des Satzes von Speicherknotenpaaren herzustellen; und
Durchführen einer Rückgewinnung von mindestens einem Speichersegment (501₁ - 501₆) aus dem Satz von Speicherknotenpaaren.

12. System nach Anspruch 11, wobei der Prozessor konfiguriert ist, um die Rückgewinnung des mindestens einen Speichersegments (501₁ - 501₆) durchzuführen, durch:
Initialisieren des QPC auf Null; und
iteratives Ausführen der folgenden Schritte, bis eine vordefinierte Anzahl von Speichersegmenten (501₁ - 501₆) aus dem Satz von Speicherknotenpaaren zurückgewonnen wurde:
Bestimmen eines oder mehrerer Speicherknotenpaare aus dem Satz von Speicherknotenpaaren basierend auf dem QPC;
Bestimmen eines Rückgewinnungseffizienzkoeffizienten, REC, für jedes Speicherknotenpaar des einen oder der mehreren Speicherknotenpaare, wobei der REC einer Anzahl von Speichersegmenten (501₁ - 501₆) entspricht, die von einem Quellknoten (504a) jedes Speicherknotenpaares zurückgewonnen werden können;
Durchführen einer Rückgewinnung des mindestens einen Speichersegments (501₁ - 501₆) von einem Quellknoten (504a) des einen oder der mehreren Speicherknotenpaare basierend auf dem REC;
Aktualisieren der Datenpegel und Ausdauerpegel, die einem oder mehreren Speicherknotenpaaren zugeordnet sind;
Bestimmen einer Anzahl von Speichersegmenten (501₁ - 501₆) basierend auf der Rückgewinnung des mindestens einen Speichersegments des einen oder der mehreren Speicherknotenpaare; und
Erhöhen des QPC.

13. System nach Anspruch 11 oder 12, wobei die Vielzahl von Datenpegeln Folgendes umfasst:
eine Menge ungültiger Daten, die in dem einen oder den mehreren Speichersegmenten vorhanden sind (501₁ - 501₆); oder eine Menge gültiger Daten, die in dem einen oder den mehreren Speichersegmenten vorhanden sind (501₁ - 501₆).

14. System nach Anspruch 12 und bevorzugt nach Anspruch 13, wobei der Prozessor konfiguriert ist, um die Vielzahl von Datenpegeln und die Vielzahl von Ausdauerpegeln dynamisch zu aktualisieren.

15. System nach Anspruch 11, wobei der Prozessor weiter konfiguriert ist zum:
Durchführen der Rückgewinnung des mindestens einen Speichersegments des Speicherknotenpaars des Satzes von Speicherknotenpaaren auf der Grundlage des Rückgewinnungseffizienzkoeffizienten, REC, des Speicherknotenpaars des Satzes von Speicherknotenpaaren, wobei der REC einer Anzahl von Speichersegmenten entspricht, die aus dem Speicherknotenpaar des Satzes von Speicherknotenpaaren zurückgewonnen werden können.

## Revendications

1. Procédé de récupération dynamique d'espace de stockage dans un système de stockage désagrégé (104), le procédé comprenant :
l'extraction d'une pluralité de niveaux de données et d'une pluralité de niveaux d'endurance d'une pluralité de nœuds de stockage (504a - 504d), dans lequel chaque niveau de données de la pluralité de niveaux de données correspond à une quantité de données présentes dans chaque segment de stockage d'un ou plusieurs segments de stockage (501₁ - 501₆) associés à chacun des nœuds de stockage ;
la détermination d'une première plage delta basée sur une différence entre des premiers paramètres et sur une charge de travail, dans lequel les premiers paramètres sont chacun basés sur la pluralité de niveaux de données, dans lequel la charge de travail est associée à la pluralité de nœuds de stockage ;
la détermination d'une deuxième plage delta basée sur une différence entre des deuxièmes paramètres et sur la charge de travail, dans lequel les deuxièmes paramètres sont chacun basés sur la pluralité ds niveaux d'endurance ;
l'identification d'un ou plusieurs nœuds sources (504a) parmi la pluralité de nœuds de stockage sur la base de la première plage delta ;
l'identification d'un ou plusieurs nœuds de destination (504b) parmi la pluralité de nœuds de stockage sur la base de la deuxième plage delta ;
l'identification d'un ensemble de paires de nœuds de stockage, parmi les un ou plusieurs nœuds sources (504a) et les un ou plusieurs nœuds de destination (504b), sur la base d'un coefficient de pénalité de qualité de service, QPC, dans lequel le QPC correspond à un nombre de sauts réseau nécessaires pour établir un chemin de données entre les deux nœuds de stockage d'une paire de nœuds de stockage de l'ensemble de paires de nœuds de stockage ; et
l'exécution de la récupération d'au moins un segment de stockage (501₁ - 501₆) parmi l'ensemble de paires de nœuds de stockage.

2. Procédé selon la revendication 1, dans lequel la réalisation de la récupération du au moins un segment de stockage (501₁ - 501₆) comprend :
l'initialisation du QPC à zéro ; et
la réalisation de manière itérative des étapes suivantes jusqu'à ce qu'un nombre prédéfini de segments de stockage (501₁ - 501₆) aient été récupérés parmi l'ensemble de paires de nœuds de stockage :
la détermination d'une ou plusieurs paires de nœuds de stockage parmi l'ensemble de paires de nœuds de stockage en fonction du QPC ;
la détermination d'un coefficient d'efficacité de récupération, REC, de chaque paire de nœuds de stockage des une ou plusieurs paires de nœuds de stockage, dans lequel le REC correspond à un nombre de segments de stockage (501₁ - 501₆) qui peuvent être récupérés à partir d'un nœud source (504a) de chaque paire de nœuds de stockage ;
la réalisation de la récupération du au moins un segment de stockage à partir d'un nœud source (504a) des une ou plusieurs paires de nœuds de stockage, sur la base du REC ;
la mise à jour des niveaux de données et des niveaux d'endurance associés à aux une ou plusieurs paires de nœuds de stockage ;
la détermination d'un certain nombre de segments de stockage (501₁ - 501₆) en fonction de la récupération du au moins un segment de stockage des une ou plusieurs paires de nœuds de stockage ; et
l'incrémentation du QPC.

3. Procédé selon la revendication 1 ou 2, dans lequel la pluralité de niveaux de données correspondent à l'un des éléments suivants :
une quantité de données invalides présentes dans les un ou plusieurs segments de stockage (501₁ - 501₆) ; ou une quantité de données valides présentes dans les un ou plusieurs segments de stockage (501₁ - 501₆).

4. Procédé selon l'une quelconque des revendications précédentes, dans lequel la pluralité de niveaux de données et la pluralité de niveaux d'endurance sont mises à jour dynamiquement.

5. Procédé selon l'une quelconque des revendications précédentes, dans lequel les un ou plusieurs premiers paramètres comprennent un niveau de données invalides maximal, un niveau de données invalides minimal, un niveau de données invalides moyen, un niveau de données valides maximal, un niveau de données valides minimal, et/ou un niveau de données valides moyen associés à la pluralité de nœuds de stockage.

6. Procédé selon l'une quelconque des revendications précédentes, dans lequel la première plage delta comprend :
une différence entre l'un desdits premiers paramètres, qui représente un niveau maximal de données invalides, et l'un desdits premiers paramètres, qui représente un niveau moyen de données invalides, lorsque la pluralité de niveaux de données correspondent à une quantité de données invalides présentes dans les un ou plusieurs segments de stockage (501₁ - 501₆) ; ou
une différence entre l'un desdits premiers paramètres qui est un niveau de données valides moyen et un autre desdits premiers paramètres qui est un niveau de données valides minimal lorsque la pluralité de niveaux de données correspondent à une quantité de données valides présentes dans les un ou plusieurs segments de stockage (501₁ - 501₆).

7. Procédé selon l'une quelconque des revendications précédentes, dans lequel les un ou plusieurs deuxièmes paramètres comprennent un niveau d'endurance maximal, un niveau d'endurance minimal, et/ou un niveau d'endurance moyen associé à la pluralité de nœuds de stockage.

8. Procédé selon l'une quelconque des revendications précédentes, dans lequel la deuxième plage delta comprend une différence entre l'un desdits deuxièmes paramètres qui est un niveau d'endurance moyen et un autre desdits deuxièmes paramètres qui est un niveau d'endurance minimal.

9. Procédé selon l'une quelconque des revendications précédentes, dans lequel la charge de travail comprend une charge de travail à forte intensité de lecture ou une charge de travail à forte intensité d'écriture.

10. Procédé selon la revendication 9, dans lequel la première plage delta et la deuxième plage delta sont réduites de moitié lorsque la charge de travail est une charge de travail intensive en écriture.

11. Système de récupération dynamique d'espace de stockage dans un système de stockage désagrégé, le système de récupération dynamique d'espace de stockage comprenant :
une mémoire ; et
un processeur configuré pour :
extraire une pluralité de niveaux de données et une pluralité de niveaux d'endurance d'une pluralité de nœuds de stockage, dans lequel chaque niveau de données de la pluralité de niveaux de données correspond à une quantité de données présentes dans chaque segment de stockage d'un ou plusieurs segments de stockage (501₁ - 501₆) associés à chacun des nœuds de stockage ;
déterminer une première plage delta basée sur une différence entre les premiers paramètres et sur une charge de travail, dans lequel les premiers paramètres sont chacun basés sur la pluralité de niveaux de données, dans lequel la charge de travail est associée à la pluralité de nœuds de stockage ;
déterminer une deuxième plage delta basée sur une différence entre les deuxièmes paramètres et sur une charge de travail, dans lequel les deuxièmes paramètres sont chacun basés sur la pluralité de niveaux d'endurance ;
identifier un ou plusieurs nœuds sources (504a) parmi la pluralité de nœuds de stockage sur la base de la première plage delta ;
identifier un ou plusieurs nœuds de destination (504b) parmi la pluralité de nœuds de stockage en fonction de la deuxième plage delta ;
identifier un ensemble de paires de nœuds de stockage, parmi les un ou plusieurs nœuds sources (504a) et les un ou plusieurs nœuds de destination (504b), sur la base d'un coefficient de pénalité de qualité de service, QPC, dans lequel le QPC correspond à un nombre de sauts réseau nécessaires pour établir un chemin de données entre les deux nœuds de stockage d'une paire de nœuds de stockage de l'ensemble de paires de nœuds de stockage ; et
effectuer la récupération d'au moins un segment de stockage (501₁ - 501₆) parmi l'ensemble de paires de nœuds de stockage.

12. Système selon la revendication 11, dans lequel le processeur est configuré pour effectuer la récupération du au moins un segment de stockage (501₁ - 501₆) par :
initialisation du QPC à zéro ; et
réalisation de manière itérative des étapes suivantes jusqu'à ce qu'un nombre prédéfini de segments de stockage (501₁ - 501₆) aient été récupérés parmi l'ensemble de paires de nœuds de stockage :
détermination d'une ou plusieurs paires de nœuds de stockage parmi l'ensemble de paires de nœuds de stockage en fonction du QPC ;
détermination d'un coefficient d'efficacité de récupération, REC, de chaque paire de nœuds de stockage des une ou plusieurs paires de nœuds de stockage, dans lequel le REC correspond à un nombre de segments de stockage (501₁ - 501₆) qui peuvent être récupérés à partir d'un nœud source (504a) de chaque paire de nœuds de stockage ;
réalisation de la récupération du au moins un segment de stockage (501₁ - 501₆) à partir d'un nœud source (504a) d'une ou plusieurs paires de nœuds de stockage, sur la base du REC ;
mise à jour des niveaux de données et des niveaux d'endurance associés aux une ou plusieurs paires de nœuds de stockage ;
détermination d'un nombre de segments de stockage (501₁ - 501₆) en fonction de la récupération du au moins un segment de stockage des une ou plusieurs paires de nœuds de stockage ; et
incrémentation du QPC.

13. Système selon la revendication 11 ou 12, dans lequel la pluralité de niveaux de données comprennent :
une quantité de données invalides présentes dans les un ou plusieurs segments de stockage (501₁ - 501₆) ; ou une quantité de données valides présentes dans les un ou plusieurs segments de stockage (501₁ - 501₆).

14. Système selon la revendication 12 et de préférence selon la revendication 13, dans lequel le processeur est configuré pour mettre à jour dynamiquement la pluralité de niveaux de données et la pluralité de niveaux d'endurance.

15. Système selon la revendication 11, dans lequel le processeur est en outre configuré pour :
effectuer la récupération du au moins un segment de stockage de la paire de nœuds de stockage de l'ensemble de paires de nœuds de stockage, sur la base dudit coefficient d'efficacité de récupération, REC, de la paire de nœuds de stockage de l'ensemble de paires de nœuds de stockage, dans lequel le REC correspond à un nombre de segments de stockage pouvant être récupérés de la paire de nœuds de stockage de l'ensemble de paires de nœuds de stockage.
